# EUROPEAN PATENT SPECIFICATION

(11) **EP 3 445 646 B1**
(45) Date of publication and mention of the grant of the patent: **15.12.2021**
(21) Application number: 16719346.5
(22) Date of filing: 19.04.2016
(51) Int. Cl.: F01K 15/04, B63J 2/12, B63H 21/38, F22B 1/18, F28D 15/00, F28D 21/00, F28F 13/00, B63B 1/34

(54) **WASTED ENERGY SAVER FOR SHIP'S ENGINE**
EINSPARER VON VERGEUDETER ENERGIE FÜR SCHIFFSMOTOR
ÉCONOMISEUR D'ÉNERGIE PERDUE POUR MOTEUR DE NAVIRE

(43) Date of publication of application: 27.02.2019
(73) Proprietor: Abulaban, Tarik Ali Mohammed, Kuwait (KW)
(72) Inventor: Abulaban, Tarik Ali Mohammed, Kuwait (KW)
(74) Representative: Frischknecht, Harry Ralph
(86) International application number: PCT/EP2016/058599
(87) International publication number: WO 2017/182055

(56) References cited:
- US-A1- 2003 153 219
- US-A1- 2012 180 484
- US-A1- 2014 076 292
- US-A1- 2014 144 137
- Ben Coxworth: "Hot hulls might mean slipperier ships", , 3 June 2011 (2011-06-03), XP055724866, Retrieved from the Internet: URL:https://newatlas.com/heating-ship-hull s-for-less-drag/18805/ [retrieved on 2020-08-25]

## Description

### TECHNICAL FIELD

The present invention relates to the reduction of waste heat energy, in particular the reduction of waste heat energy produced from engines of ships.

### PRIOR ART

It is well known that enormous amount of heat energy comes out of ships engines through exhaust chambers, with temperatures reaching above 300°C there were many significant inventions done in the last 15 years to get benefit of this wasted energy, through transferring this energy to steam boilers, and transferring it to electrical energy.

In this invention, the use of this wasted energy is more significant, because it will be used to take the maximum possible benefit of water physical properties, in order to reduce water drag significantly, and also to produce self-motivated energy from sea water. These advantages will improve energy consumption, top speed, and reduce CO₂ emissions from marine ships engines.

US 2003/153219 A1 discloses a watercraft including a coolant circulating system including a heat exchanger for cooling the coolant. US 2014/076292 A1 discloses a heat exchanger. US 2012/180484 A1 discloses a heat storage system. US 2014/144137 A1 discloses a system for steam generation utilizing a high-pressure steam boiler unit. This background art can be regarded as useful to understand the invention.

Prior art containing hints on using heat from a ship engine for raising the temperature of sea water for reducing drag is known from the document XP055724866 (URL - https://newatlas.com/heating-ship-hulls-for-less-drag/18805/).

### SUMMARY OF THE INVENTION

The invention is a ship according to the subject-matter of claim 1.

This invention is considered a significant improvement in reducing heat wasted energy from ships engines. It is preferred to take advantage from enormous heat energy which comes out from ships engines through exhaust chambers, and to preferably transfer this heat to the front edge of the ship, in order to raise the heat of the sea water in contact with the said edge surface, to reach temperatures exceeding 100°C and to preferably take advantage of the physical properties of water, and the significant drop of its density when its temperature exceeds 100°C, this will reduce the drag significantly, which will reduce energy consumption for the ship's engine. Besides that, it is preferred to use the self-pushing force from water (from higher density water in the rear edge of the ship) due to water physical phenomena, besides drag reduction, which will increase the top speed of the ship significantly. All the mentioned advantages will reduce CO₂ emissions, and therefore will be considered environment friendly.

In one embodiment of this invention, the wasted energy coming out from marine ships engines through exhaust chambers, and which exceed 300°C, is transferred through metal heat transfer coils, to a pressure steam boiler, to control and enlarge heat as needed, and then this heat energy is transferred to the front edge of the ship. This heat energy is then transferred to sea water in contact with the ships front edge below water level. This heat energy will raise the said sea water temperature to reach above 100°C.

At this stage water density is reduced significantly. This density reduction will reduce drag, and consequently increase ships speed and reduce energy consumption. Besides that, water will induce lateral force from the cold high density rear edge to the hot low density water at the front edge. This induced force will add to the propeller's moving force which also saves more energy. Less CO₂ emissions due to less petrol consumption will make this invention environment friendly.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

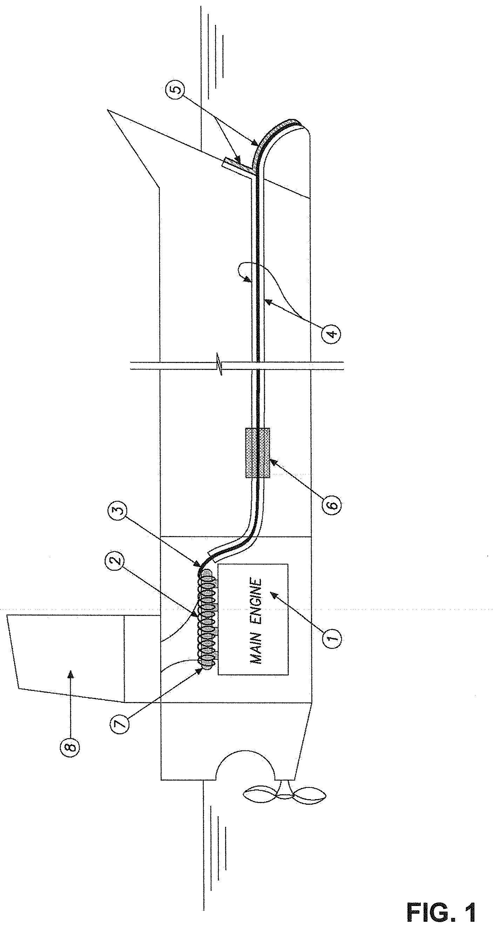

Fig. 1 shows a longitudinal cross section of the marine ship.

### DESCRIPTION OF PREFERRED EMBODIMENTS

Figure 1 shows a longitudinal cross section of the marine ship. In this figure, the main engine 1 is shown, which the exhaust chamber 7 transferring exhaust gases to the chimney 8. A metal coil 2 is fixed surrounding the said exhaust chamber, and is connected to a metal heat transfer rod 3. The said rod is insulated by ceramic insulator 4. The said metal rod transfers heat energy to a steam boiler 6. The said boiler enlarges heat energy, and controls heat transfer through the insulated metal rod to a metal sheet 5 fixed on the front edge of the ship.

That is to say, Fig (1) shows a cross sectional view of the ship, where 1 is the main ship's engine, 7 is the exhaust chamber transferring hot gas emissions to chimney 8. A metal heat transfer coil 2 surrounding the said exhaust chamber and in contact to its surface, transfers the heat to metal heat transfer rod 3 which will transfer the heat to a pressure steam boiler 6. The said metal rod is insulated by heat insulator from ceramic material 4. The heat is transferred through the insulated metal rod to a special metal sheet fixed on the lower part of the ship's front edge 5, which is in contact of sea water opposing ships lateral movement causing drag. This heat transfer will increase the temperature of the sea water in contact to the said metal sheet 5 to reach the required and controlled temperatures. This increase in the said water temperature will lead to significant reduction to its density, which will lead to getting all the advantages explained before.

### LIST OF REFERENCE SIGNS

| | | | |
|---|---|---|---|
| 1 | main ship's engine | 5 | front edge |
| 2 | metal heat transfer coil | 6 | pressure steam boiler |
| 3 | metal heat transfer rod | | |
| 4 | heat insulator | | |

## Claims

1. A ship comprising a ship engine (1), wherein the ship is designed for transferring heat from an exhaust chamber of the ship engine (1) to a special metal sheet fixed on the lower part of the front edge (5) of the ship for raising the temperature of seawater in contact with said special metal sheet, wherein said special metal sheet is fixed on the lower part of the ship's front edge (5) which is in contact with sea water.

2. A ship according to claim 1, wherein the ship is designed for transferring heat from the ship engine (1) to a special metal sheet fixed on the lower part of the front edge (5) of the ship for raising the temperature of seawater in contact with the special metal sheet to a temperature exceeding 100°C.

3. The ship according to one of the preceding claims, comprising a metal coil (2) surrounding an exhaust chamber of the ship engine (1).

4. The ship according to claim 3, wherein the metal coil (2) is designed for heat transfer.

5. The ship according to one of the preceding claims, comprising a pressure steam boiler (6) for controlling and increasing heat.

6. The ship according to one of the preceding claims, comprising a metal rod (3) for heat transfer comprising an insulation material for keeping heat energy inside the metal rod (3).

7. The ship according to claim 6, wherein the insulation material comprises ceramic.

8. The ship according to claims 5 and 6, wherein the metal rod (3) is arranged for transferring heat energy to the pressure steam boiler (6).

9. The ship according to claims 3, and 5 and 6, wherein the metal rod (3) is arranged for transferring heat energy from the metal coil (2) to the pressure steam boiler (6).

10. The ship according to claim 5 and one of claims 6-9, wherein the metal rod (3) is arranged for transferring heat energy from the pressure steam boiler (6) to the special metal sheet.

11. The ship according to claim 5 and claim 6, wherein the pressure steam boiler (6) comprises a control unit that is adapted for controlling the amount of heat energy transferred to the special metal sheet through the metal rod (3).

12. Method for operating a ship according to one of the preceding claims, wherein heat is transferred from the ship engine (1) to the special metal sheet fixed on the lower part of the front edge (5) which is in contact with sea water, thereby raising the temperature of seawater in contact with the special metal sheet.

13. The method according to claim 12, wherein the temperature of seawater in contact with the special metal sheet fixed on the lower part of the front edge (5) is heated to exceed 100°C.

## Patentansprüche

1. Schiff mit einem Schiffsmotor (1), wobei das Schiff so ausgebildet ist, dass es Wärme von einer Abgaskammer des Schiffsmotors (1) auf ein spezielles Metallblech überträgt, das am unteren Teil der Vorderkante (5) des Schiffes befestigt ist, um die Temperatur des Meerwassers, das mit dem speziellen Metallblech in Kontakt ist, zu erhöhen, wobei das spezielle Metallblech am unteren Teil der Vorderkante (5) des Schiffes befestigt ist, der mit dem Meerwasser in Kontakt ist.

2. Schiff nach Anspruch 1, wobei das Schiff so ausgebildet ist, dass es Wärme vom Schiffsmotor (1) auf ein spezielles Metallblech überträgt, das am unteren Teil der Vorderkante (5) des Schiffes befestigt ist, um die Temperatur des mit dem speziellen Metallblech in Kontakt stehenden Meerwassers auf eine Temperatur von mehr als 100°C zu erhöhen.

3. Schiff nach einem der vorhergehenden Ansprüche, umfassend eine Metallspirale (2), die eine Abgaskammer des Schiffsmotors (1) umgibt.

4. Schiff nach Anspruch 3, wobei die Metallschlange (2) für die Wärmeübertragung ausgelegt ist.

5. Schiff nach einem der vorhergehenden Ansprüche, umfassend einen Druckdampfkessel (6) zur Steuerung und Erhöhung der Wärme.

6. Schiff nach einem der vorhergehenden Ansprüche, umfassend einen Metallstab (3) zur Wärmeübertragung, der ein Isoliermaterial enthält, um die Wärmeenergie im Inneren des Metallstabs (3) zu halten.

7. Schiff nach Anspruch 6, wobei das Isoliermaterial Keramik umfasst.

8. Schiff nach einem der Ansprüche 5 und 6, wobei der Metallstab (3) zur Übertragung von Wärmeenergie an den Druckdampfkessel (6) angeordnet ist.

9. Schiff nach Anspruch 3 sowie 5 und 6, wobei der Metallstab (3) zur Übertragung von Wärmeenergie von der Metallspule (2) zum Druckdampfkessel (6) angeordnet ist.

10. Schiff nach Anspruch 5 und einem der Ansprüche 6 bis 9, wobei der Metallstab (3) so angeordnet ist, dass er Wärmeenergie von dem Druckdampfkessel (6) auf das spezielle Metallblech überträgt.

11. Schiff nach Anspruch 5 und Anspruch 6, wobei der Druckdampfkessel (6) eine Steuereinheit umfasst, die zur Steuerung der durch den Metallstab (3) auf das Spezialblech übertragenen Wärmeenergiemenge eingerichtet ist.

12. Verfahren zum Betreiben eines Schiffes nach einem der vorhergehenden Ansprüche, wobei Wärme vom Schiffsmotor (1) auf das Spezialblech übertragen wird, das am unteren Teil der Vorderkante (5) befestigt ist, die mit Meerwasser in Kontakt ist, wodurch die Temperatur des Meerwassers, das mit dem Spezialblech in Kontakt ist, erhöht wird.

13. Verfahren nach Anspruch 12, wobei die Temperatur des Meerwassers, das mit dem am unteren Teil der Vorderkante (5) befestigten Spezialblech in Berührung kommt, auf über 100°C erhitzt wird.

## Revendications

1. Un navire équipé d'un moteur de navire (1), dans lequel le navire est conçu pour transférer de la chaleur d'une chambre d'échappement du moteur de navire (1) à une feuille métallique spéciale fixée sur la partie inférieure du bord d'attaque (5) du navire pour augmenter la température de l'eau de mer en contact avec la feuille métallique spéciale, dans lequel ladite feuille métallique spéciale est fixée sur la partie inférieure du bord d'attaque (5) du navire qui est en contact avec l'eau de mer.

2. Un navire selon la revendication 1, dans lequel le navire est agencé pour transférer de la chaleur du moteur de navire (1) à une feuille métallique spéciale fixée sur la partie inférieure du bord d'attaque (5) du navire pour augmenter la température de l'eau de mer en contact avec la feuille métallique spéciale à une température de plus de 100°C.

3. Le navire selon l'une quelconque des revendications précédentes, comprenant une spirale métallique (2) entourant une chambre d'échappement du moteur du navire (1).

4. Le navire récipient selon la revendication 3, dans lequel la spirale métallique (2) est conçue pour le transfert de chaleur

5. Le navire selon l'une quelconque des revendications précédentes, comprenant une chaudière à vapeur sous pression (6) pour contrôler et augmenter la chaleur.

6. Le navire selon l'une quelconque des revendications précédentes, comprenant une barre métallique (3) pour un transfert de chaleur, comprenant un matériau isolant pour maintenir l'énergie thermique à l'intérieur de la barre métallique (3).

7. Le navire selon la revendication 6, dans lequel le matériau isolant comprend de la céramique.

8. Le navire selon l'une quelconque des revendications 5 et 6, dans laquelle la barre métallique (3) est agencée pour transférer de l'énergie thermique à la chaudière à vapeur sous pression (6).

9. Le navire selon la revendication 3, ainsi que 5 et 6, dans lequel la barre métallique (3) est agencée pour transférer de l'énergie thermique depuis la spirale métallique (2) à la chaudière à vapeur sous pression (6).

10. Le navire selon la revendication 5 et l'une quelconque des revendications 6 à 9, dans lequel la barre métallique (3) est agencée pour transférer de l'énergie thermique de la chaudière à vapeur sous pression (6) à la feuille métallique spéciale.

11. Le navire selon la revendication 5 et la revendication 6, dans lequel la chaudière à vapeur sous pression (6) comprend une unité de commande agencée pour contrôler la quantité d'énergie thermique transférée à la feuille métallique spéciale à travers la barre métallique (3).

12. Un procédé d'exploitation d'un navire selon l'une quelconque des revendications précédentes, dans lequel de la chaleur est transférée du moteur du navire (1) à la feuille métallique spéciale fixée sur la partie inférieure du bord d'attaque (5) qui est en contact avec l'eau de mer, ainsi augmentant la température de l'eau de mer qui est en contact avec la feuille métallique spéciale.

13. Le procédé selon la revendication 12, dans lequel la température de l'eau de mer en contact avec la feuille métallique spéciale fixée sur la partie inférieure du bord d'attaque (5) est chauffée à plus de 100°C.
